# EUROPEAN PATENT SPECIFICATION

(11) **EP 0 673 816 B1**
(45) Date of publication and mention of the grant of the patent: **06.05.1998**
(21) Application number: 95102170.8
(22) Date of filing: 16.02.1995
(51) Int. Cl.: B60T 13/14

(54) **Hydraulic servo-brake**
Hydraulische Servobremse
Frein hydraulique assisté

(30) Priority: 23.03.1994 IT TO940213
(43) Date of publication of application: 27.09.1995
(73) Proprietor: FIAT AUTO S.p.A., 10135 Torino (IT)
(72) Inventor: Titolo, Andrea, I-10126 Torino (IT)
(74) Representative: Di Francesco, Gianni

(56) References cited:
- DE-A- 3 735 299
- FR-A- 2 476 573
- GB-A- 2 077 375

## Description

The present invention refers to an automobile hydraulic servo-brake.

Most servo-brakes of known kind for use on automobiles use air as operation fluid. Petrol engines use air that is withdrawn by the vacuum from the induction manifold, while automobiles having Diesel engines are equipped with a special air pump providing the necessary vacuum for operating the servo-brake. Industrial vehicles, on the other hand, make use of servo-brakes actuated by the air that is compressed by a suitable compressor.

Hydraulic or oleodynamic systems have been recently proposed. These systems are characterised in that they also operate on the brake circuit adjusting the pressure so as to prevent the wheels from blocking, etc.

One of the typical inconveniences occurring with the latter kind of devices as the one illustrated in FR-A-2 476 573, is oil leakage, that happens with time due to the wear of a gasket that is fitted on the brake push rod. The push rod is actually subjected to stresses having also transverse components. As a result, also a slightly worn gasket can no longer sealingly keep pressurised fluid within the servo-brake.

It is an object of the present invention to provide a servo-brake capable of resolving the above stated problems and less expensive than a conventional vacuum-operated servo-brake.

It is another object of the present invention to provide a servo-brake that, being operated by the power steering pump, allows to eliminate air pumps for use on Diesel engines.

It is a further object of the invention to provide a device that allows to reduce mechanical power loss, increase performances and reduce fuel consumption and emission.

A further object of the present invention is to provide a servo-brake absolutely silent in operation and having extremely compact size, that is more reliable than conventional servo-brakes and not affected by efficiency loss at high altitude, as normally happens with conventional servo-brakes, that become less efficient as the atmospheric pressure decreases.

These and further objects and advantages, which will become apparent hereinafter, are attained according to the invention by an automobile hydraulic servo-brake, of the type comprising an outer housing having an inner transversal wall provided with a bore for allowing the passage of a rod for actuating a brake pump, the rod being inserted in a control bush sliding relative to the rod and the outer housing upon actuating the brake pedal, The servo-brake is characterised in that mounted to the rod are two axially spaced annular partitions sealingly contacting the inner axial bore of the control bush. The transversal wall and the partitions divide the space inside the servo-brake in a sequence of four adjacent chambers of which only one intermediate chamber is constantly filled with pressurised oil, the remaining chambers being connected to oil discharging means so as to operate with low-pressure oil.

The structural and operational characteristics of a preferred but not limiting embodiment of the servo-brake according to the present invention are described hereinafter with reference to the accompanying drawings, in which:
- Fig. 1: is an axial cross section view of a servo-brake according to the invention;
- Fig. 2: is an axial cross section of the servo-brake taken on an axial plane perpendicular to the axial section plane of Fig. 1;

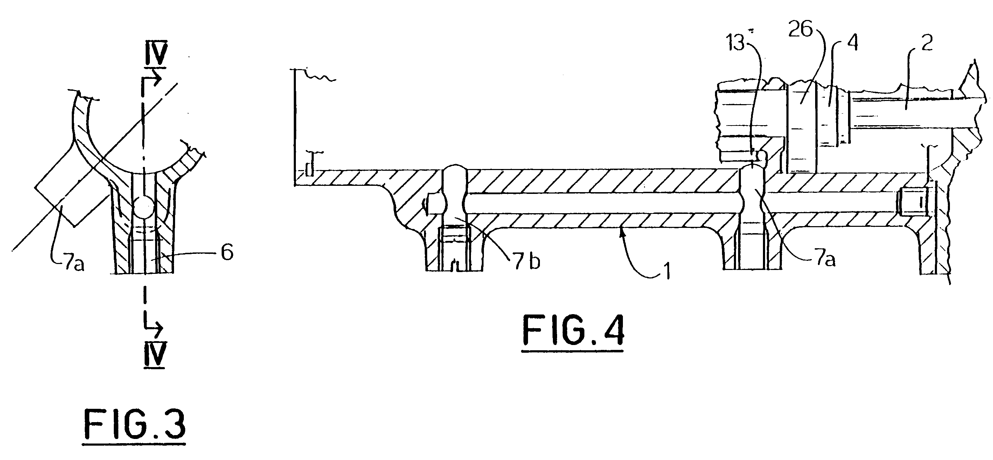

- Fig. 3: is a partial transversal cross section view on line III- III of Fig. 2; and
- Fig. 4: is a partial cross section view on the line IV-IV of Fig. 3.

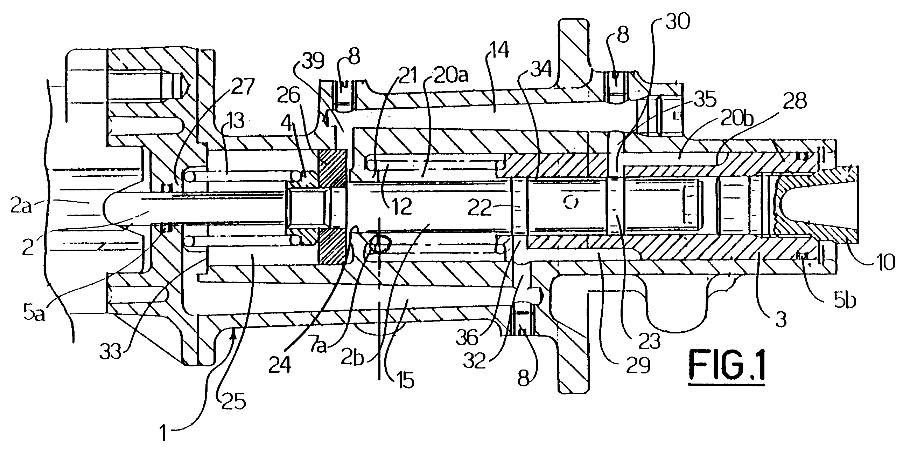

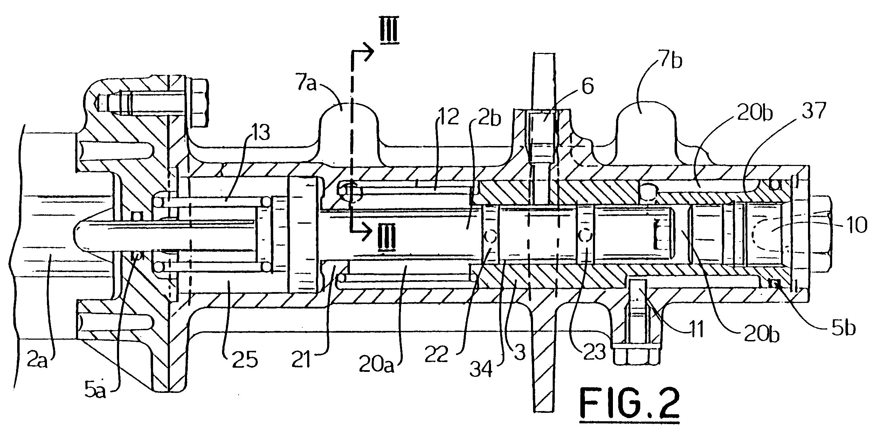

With reference initially to Figs. 1 and 2, numeral 1 indicates the outer shell of the servo-brake, one end of which is conventionally connected to body 2 of the brake pump, comprising a main rod 2a. The other end of the outer shell 1 slidably accommodates a seat 10 for receiving the push rod (not shown) of the foot brake pedal.

The outer shell or housing 1 forms an inner longitudinally disposed cylindrical chamber 20 in which a control bush 3 is slidably seated. The control bush 3 has a substantially tubular shape and its diameter is congruent to the bore of chamber 20.

A rod 2b is in turn slidably mounted within tubular control bush 3. The rod 2b is suitably sized so as to have a slightly smaller diameter than the inner bore of the control bush. Two partitions 22, 23 having a diameter substantially equal to the inner bore of the control bush are provided on the rod 2b. Partitions 22, 23 are axially spaced and slidably mounted within said control bush.

The shape of the control bush 3 is designed so as to form two diametrically opposite and axially displaced distinct hollow parts 28, 29. Two radial ports 35, 36 are respectively obtained proximate to the front end portions of either hollow part 28, 29. In the unactuated arrangement, ports 35, 36 are closed by partitions 22, 23. As shown in Fig. 2, the partitions 22, 23, the portion of rod 2b comprised between these, and the inner wall of the control bush 3 determine an annular chamber 34 in which pressurised oil is continuously supplied through an inlet 6 communicating with an oil pump or another outer pressure source (not shown). With reference to Fig. 2, a further hollow 37 is obtained in the front portion of the control bush 3. Hollow 37 is separated and disposed at about a 45° angle relative to hollow 28 (as shown in Fig. 1). Hollow 37 communicates with the inside of the control bush 3 forming a chamber 20b adjacent to the pressurised chamber 34.

The outer body 1 forms an intermediate radial wall 21 with a central bore 24 adapted for allowing passage of the rod 2b. Wall 21 separates the cylindrical chamber 20 from an adjacent cylindrical chamber 25 accommodating a disc or piston 26 secured to rod 2b by means of a threaded nut 4. Also the end wall 27 of chamber 25, opposite to wall 21, has a bore to allow passage of rod 2b acting upon the main rod 2a. A sealing ring 5a prevents leakage of the oil that fills the inner parts of the servo-brake, as will be more apparent hereafter.

Two calibrated return springs 12, 13, adapted for biasing respectively the rod 2b and the tubular control bush to the right in the unactuated position of Figs. 1 and 2, are respectively seated in chambers 20a and 25.

According to the invention, the two chambers 20, 25 communicate by means of two separate channels 14, 15 that are cast in the outer body 1 of the servo-brake and run parallel to chambers 20, 25. Still referring to Figs. 1 and 2, channel 14 communicates with chamber 20, at the level of hollow 28 in the unactuated arrangement, by means of a port 30, and communicates with the higher or rear part of chamber 25 through a port 39. Channel 15 communicates with the front part of chamber 25 through a port 33 and with chamber 20 through another port 32. A sealing ring 5b is fitted on the front end portion of the control bush 3 sealingly engaging the wall of chamber 20. Reference numeral 11 (Fig. 2) indicates a grain that serves to prevent the control bush 3 from rotating.

In operation, on the servo-brake according to the present invention, chamber 34 is the only chamber that is always pressurised, the oil being contained between the sealing partitions 22 and 23.

Starting from the initial resting position of Figs. 1 and 2, by pressing the foot pedal, the relevant push rod (not shown) urges seat 10, so that the control bush 3 moves forward and compresses spring 12. Forward displacement of the control bush 3 opens port 35 and puts annular chamber 34 in communication with the hollow 28. Consequently, oil can flow out of port 30, pass into channel 14 and through port 39 it reaches chamber 25 behind the disc 26. The pressurised oil urges the disc 26 to the left. Disc 26 pulls rod 2b with it, following the motion of the control bush 3, and compressing the spring 13. As the control bush 3 advances (moving to the left looking at Figs. 1 and 2) relative to rod 2, it causes also port 36 to open. The oil in chamber 25 and channel 15 flows through ports 32 and 36 into the frontmost part 20a of chamber 20, where the spring 12 is contained. According to the invention, the front chamber 20a and the rear chamber 20b are both provided with respective outlets 7a, 7b through which the oil coming into said chambers is returned to the oil tank (not shown) from which it is sent back into circulation to the delivery inlet 6.

By removing the foot from the brake pedal, the push rod stops acting on the seat 10, so the control bush 3 is biased to the right by the spring 12. Disc 26 moves back due to the bias of spring 13 and the pressure of the oil flowing in the reverse direction, with channel 15 delivering the oil and channel 14 acting as a relief channel.

When the oil pump is not operating, braking is carried out directly without servo-control, as follows. The seat 10 pushes the control bush 3 to the left taking up the axial initial clearance "C" between members 10 and 2b, and from this point on, it biases rod 2 directly, thereby actuating the brake pump. The return of the control bush 3 is always carried out by spring 12, while the return of the main rod 2 is carried out by spring 13.

As it will be apparent, the only chamber of the servo-brake that contains constantly pressurised oil is the annular chamber 34, while the other chambers or hollow parts operate with low pressurised oil. Particularly, the oil arriving in chambers 25, 20a and 20b is discharged through relief ports 7a and 7b. Therefore, the risk of oil leakage from the front and rear end portions of the servo-brake is avoided.

## Claims

1. An automobile hydraulic servo-brake, of the type comprising an outer housing (1) having an inner transversal wall (21) provided with a bore for allowing the passage of a rod (2b) for actuating a brake pump, the rod (2b) being inserted in a control bush (3) sliding relative to the rod (2b) and the outer housing (1) upon actuating the brake pedal; characterised in that mounted to the rod (2b) are two axially spaced annular partitions (22, 23) sealingly contacting the inner axial bore of the control bush (3), said transversal wall (21) and said annular partitions (22, 23) dividing the space inside the servo-brake in a sequence of four adjacent chambers (25, 20a, 34, 20b) of which only one intermediate chamber (34) is constantly filled with pressurised oil, the remaining chambers (25, 20a, 20b) being connected to oil discharging means (7a, 7b) so as to operate with low-pressure oil.

2. A servo-brake according to claim 1, characterised in that the oil discharging means consist of relief apertures (7a, 7b) communicating with chambers (20a) and (20b).

3. A servo-brake according to claim 1, characterised in that the front chamber (25) containing a disc (26) for driving the rod (2b) communicates with the chamber (20a) through a discharge channel (15) located between the end of stroke of disc (26) in chamber (25) and the chamber (20a); the chamber (25) communicating with the pressurised chamber (34) through a delivering channel (14) located between the beginning of the stroke of disc (26) and a port (35) obtained in the tubular control bush (3), said port (35) being normally closed by said annular partition (23) in the unactuated arrangement with the control bush (3) retracted.

## Patentansprüche

1. Hydraulische Kraftfahrzeugservobremse der Art, die ein äußeres Gehäuse (1) umfaßt, das eine innere Querwand (21) aufweist, die mit einer Bohrung zum Ermöglichen des Durchtritts einer Kolbenstange (2b) zum Betätigen einer Bremspumpe versehen ist, wobei die Kolbenstange (2b) in eine Steuerbuchse (3) eingeführt ist, die bei Betätigen des Bremspedals relativ zur Kolbenstange (2b) und zum äußeren Gehäuse (1) gleitet; dadurch gekennzeichnet, daß an der Kolbenstange (2b) zwei axial beabstandete ringförmige Abschnitte (22, 23) befestigt sind, die die innere Axialbohrung der Steuerbuchse (3) dichtend berühren, wobei die Querwand (21) und die ringförmigen Abschnitte (22, 23) den Raum innerhalb der Servobremse in eine Folge von vier benachbarten Kammern (25, 20a, 34, 20b) unterteilen, von denen nur eine Zwischenkammer (34) konstant mit druckbeaufschlagtem Öl gefüllt ist, und die übrigen Kammern (25, 20a, 20b) mit einer Ölauslaßeinrichtung (7a, 7b) derart verbunden sind, daß sie mit Öl unter niedrigem Druck betreibbar sind.

2. Servobremse nach Anspruch 1, dadurch gekennzeichnet, daß die Ölauslaßeinrichtung aus Ausgleichsöffnungen (7a, 7b) besteht, die mit Kammern (20a) und (20b) kommunizieren.

3. Servobremse nach Anspruch 1, dadurch gekennzeichnet, daß die zum Antreiben der Kolbenstange (2b) eine Scheibe (26) enthaltende vordere Kammer (25) mit der Kammer (20a) über einen Auslaßkanal (15) kommuniziert, der zwischen dem Ende eines Hubs der Scheibe (26) in der Kammer (25) und der Kammer (20a) angeordnet ist; daß die mit der druckbeaufschlagten Kammer (34) durch einen Versorgungskanal (14), der zwischen dem Beginn des Hubs der Scheibe (26) und einem in der rohrförmigen Steuerbuchse (3) erzielten Durchlaß (35) angeordnet ist, kommunizierende Kammer (25), wobei der Durchlaß (35) normalerweise durch den ringförmigen Abschnitt (23) in der nicht betätigten Anordnung mit zurückgezogener Steuerbuchse (3) verschlossen ist.

## Revendications

1. Servofrein hydraulique pour automobile, du type comprenant un logement extérieur (1) ayant une paroi latérale intérieure (21) qui comporte un alèsage permettant le passage d'un piston (2b) destiné à actionner une pompe de frein, le piston (2b) étant inséré dans une douille de commande (3) glissant par rapport au piston (2b) et au logement extérieur (1) lors de l'actionnement de la pédale de frein ; caractérisé en ce que sur le piston (2b) sont montées deux cloisons annulaires axialement espacées (22, 23) qui sont au contact de l'alésage axial intérieur de la douille de commande (3), ladite paroi latérale (21) et lesdites cloisons (22, 23) divisant l'espace à l'intérieur du servofrein en une séquence de quatre chambres contiguës (25, 20a, 34, 20b) parmi lesquelles seule une chambre intermédiaire (34) est constamment remplie d'huile sous pression, les chambres restantes (25, 20a, 20b) étant raccordées à un moyen d'évacuation d'huile (7a, 7b) de manière à fonctionner à faible presison d'huile.

2. Servofrein selon la revendication 1, caractérisé en ce que ur le moyen d'évacuation d'huile est constitué d'ouvertures de décharge (7a, 7b) communiquant avec les chambres (20a) et (20b).

3. Servofrein selon la revendication 1, caractérisé en ce que la chambre avant (25) contenant un disque (26) pour entraîner le piston (2b) communique avec la chambre (20a) par l'intermédiaire d'un canal d'évacuation (15) situé entre la fin de course du disque (26) dans la chambre (25) et la chambre (20a) ; la chambre (25) communiquant avec la chambre sous pression (34) par l'intermédiaire d'un canal d'évacuation (14) situé entre le début de course du disque (26) et un orifice (35) situé dans la douille de commande tubulaire (3), ledit orifice (35) étant normalement fermé par ladite cloison annulaire (25) dans la configuration non actionnée, la douille de commande (3) étant rétractée.
